# EUROPEAN PATENT SPECIFICATION

(11) **EP 1 596 118 B1**
(45) Date of publication and mention of the grant of the patent: **08.02.2012**
(21) Application number: 04711726.2
(22) Date of filing: 17.02.2004
(51) Int. Cl.: F16L 37/00

(54) **DUSTPROOF CAP FOR QUICK CONNECTOR AND QUICK CONNECTOR**
STAUBFESTE KAPPE FÜR SCHNELLVERBINDER UND SCHNELLVERBINDER
CAPUCHON ETANCHE AUX POUSSIERES POUR CONNECTEUR RAPIDE ET CONNECTEUR RAPIDE ASSOCIE

(30) Priority: 20.02.2003 JP 2003042582
(43) Date of publication of application: 16.11.2005
(73) Proprietor: Sanoh Kogyo Kabushiki Kaisha, Koga-shi, Ibaraki-ken 306-0023 (JP)
(72) Inventor: Okada, Hiroyuki, c/o Sanoh Kogyo Kabushiki Kaisha, Koga-shi, Ibaraki 3060041 (JP)
(74) Representative: HOFFMANN EITLE
(86) International application number: PCT/JP2004/001730
(87) International publication number: WO 2004/074729

(56) References cited:
- JP-A- 58 225 290
- JP-A- 2002 206 683
- JP-A- 2002 276 878
- JP-A- 2004 060 884
- JP-U- 62 097 388

## Description

### TECHNICAL FIELD

The present invention relates to a dust plug for a quick connector and to quick connectors adapted for use with such dust plugs. Embodiments of the invention may be useful for coupling tubes of an automotive fuel system, an automotive pneumatic system or an automotive hydraulic system. More particularly, the present invention relates to a dust plug for protecting an O ring included in a quick connector from foreign matters, such as dust, and to quick connectors adapted for use.with the same.

### BACKGROUND ART

Quick connectors are used, for example, for connecting fuel tubes of automotive fuel systems. The quick connector is capable of simply and quickly connecting tubes without using any fastening means, such as bolts. The quick connector has a connector body to be attached to one of two tubes, and a retainer to be pressed in the connector body after inserting the other tube in the connector body to retain the tube in the coupling body. A representative quick connector is disclosed in U.S. Pat. No. 5,542,716.

An annular ridge is formed on the outer circumference of an end part of a tube to be inserted in the connector body. The retainer is pressed radially in the connector body. The retainer is engaged with the annular ridge to restrain the tube from coming off the connector body. The quick connector of the type is designed such that the retainer does not exercise its locking function unless the retainer is completely pressed in the connector body.

In some cases, a dust plug is put on the conventional quick connector before shipping the quick connector to prevent the entrance of foreign matters, such as dust, into the quick connector. Thus foreign matters are prevented from entering the quick connector by the dust plug because an O ring held in the quick connector will be impaired if foreign matters adhere to the O ring. Such a conventional dust plug is known from GB 2131110 A.

Usually, a temporary quick connector assembly formed by combining the connector body, the retainer and, when necessary, the dust plug is delivered to the user. In the temporary quick connector assembly, the retainer is not fully pressed in the connector body. When the quick connector is used, the retainer is simply pressed in the connector body after fully inserting a tube in the connector body.

In the known quick connector provided with the dust plug, the retainer can be locked to the connector body even if the dust plug is not removed. Therefore, it often occurs that the retainer is locked to the connector body by mistake before the quick connector is used.

### SUMMARY OF THE INVENTION

According to a first aspect of the present invention, there is provided a dust plug for a quick connector in which a tube provided with an annular ridge is to be inserted and fixedly retained, the quick connector including: (i) a connector body having an axis, an entrance opening formed at one end through which the tube is to be inserted in the connector body, O rings held in the connector body to effectively seal gaps between the connector body and the tube when it has been fully inserted in the connector body, and an opening formed in a side wall of the connector body; and (ii) a retainer to be inserted in the connector body, for retaining the tube in the connector body, by pressing the retainer through the opening in the connector body side wall in a direction perpendicular to the axis of the connector body to engage with the annular ridge of the tube when it has been fully inserted in the connector body to restrain the tube from separating from the tubular body, wherein the quick connector is to be used by removing the dust plug from the quick connector, inserting the tube in the connector body and pressing the retainer into the connector body, the dust plug comprising: a cylindrical O ring protecting part to fit in the O rings, when the dust plug is inserted in the connector body, for protecting the O rings from foreign matters, characterized in that: the dust plug further comprises a stopping arm formed integrally with the O ring protecting part and capable, when the dust plug is inserted in the connector body, of engaging with a part of the retainer outside the connector body to obstruct the insertion of the retainer into the connector body.

According to a second aspect of the present invention, there is provided a quick connector assembly including quick connector in which a tube provided with an annular ridge is to be inserted and fixedly retained, the quick connector comprising: a connector body having an axis, an entrance opening formed at one end through which the tube is to be inserted in the connector body, O rings held in the connector body to effectively seal gaps between the connector body and the tube when it has been fully inserted in the connector body, and an opening formed in a side wall of the connector body; and a retainer to be inserted in the connector body, for retaining the tube in the connector body, by pressing the retainer through the opening in the connector body side wall in a direction perpendicular to the axis of the connector body to engage with the annular ridge of the tube when it has been fully inserted in the connector body to restrain the tube from separating from the tubular body the quick connector assembly further including a dust plug comprising: an O ring protecting part to fit in the O rings, when the dust plug is inserted in the connector body, for protecting the O rings from foreign matters, characterized in that: the dust plug further comprises a retainer stopping part formed integrally with the O ring protecting part and capable, when the dust plug is inserted in the connector body, of interfering with a part of the retainer to obstruct the insertion of the retainer into the connector body, wherein the dust plug is inserted in the connector body, such that the retainer is obstructed from being inserted in the connector body.

### BRIEF DESCRIPTION OF THE DRAWINGS

For a better understanding of the invention and to show how the same may be carried into effect, reference will now be made, by way of example, to the accompanying drawings, in which:
Fig. 1A is an exploded perspective view of a first embodiment of a quick connector assembly according to the present invention;
Fig. 1B is a perspective view of an end part of a tube to be connected to another tube by the quick connector;
Fig. 2 is a longitudinal sectional view of a temporary quick connector assembly formed by combining the quick connector including a connector body and the retainer, and the dust plug;
Fig. 3 is a cross-sectional view taken on the line III-III in Fig. 2;
Fig. 4 is a longitudinal sectional view of the quick connector and the tube retained in the quick connector; and
Fig. 5 is a longitudinal sectional view of a temporary quick connector assembly including an embodiment of a dust plug according to the present invention.

### DETAILED DESCRIPTION

The following describes a quick connector including a connector body and a retainer, and a dust plug for the quick connector, which is capable of inhibiting locking the retainer to the connector body unless the same is removed from the quick connector.

The following generally relates to a dust plug for a quick connector including a connector body and a retainer capable of retaining in the connector body a tube provided with an annular ridge only when the tube free end is completely inserted in the connector body, having: a dust plug body for protecting O rings held in the connector body from foreign matters; and a retainer stopping part formed integrally with the dust plug body and capable of interfering with a part of the retainer; wherein, when the dust plug is inserted in the connector body, the O ring protecting part fits in the O rings and the retainer stopping part holds the retainer at a position where the retainer is unable to retain the tube, in the connector body.

The disclosed dust plug may be a cylindrical member integrally having a first cylindrical part of a small diameter as the O ring protecting part, and a second cylindrical part of a large diameter as the retainer stopping part.

The dust plug may have a cylindrical part as the O ring protecting part, and a stopping projection capable of engaging with a part of a sliding retainer outside the connector body.

A disclosed embodiment of a quick connector includes: a connector body, and a retainer; wherein the retainer is able to retain a tube provided with an annular ridge at a free end thereof only when said free end is sufficiently completely inserted in the connector body, characterized in that when the disclosed dust plug is inserted in the connector body, the retainer is obstructed from being inserted in the connector body.

Preferred embodiments of dust plugs according to the present invention and a temporary quick connector assembly will be described with reference to the accompanying drawings.

### First Embodiment

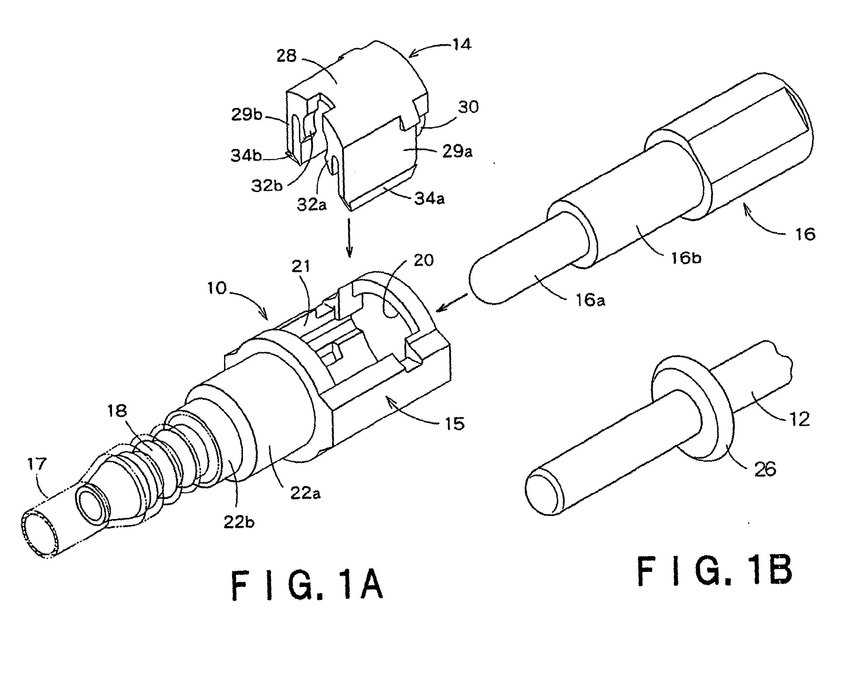

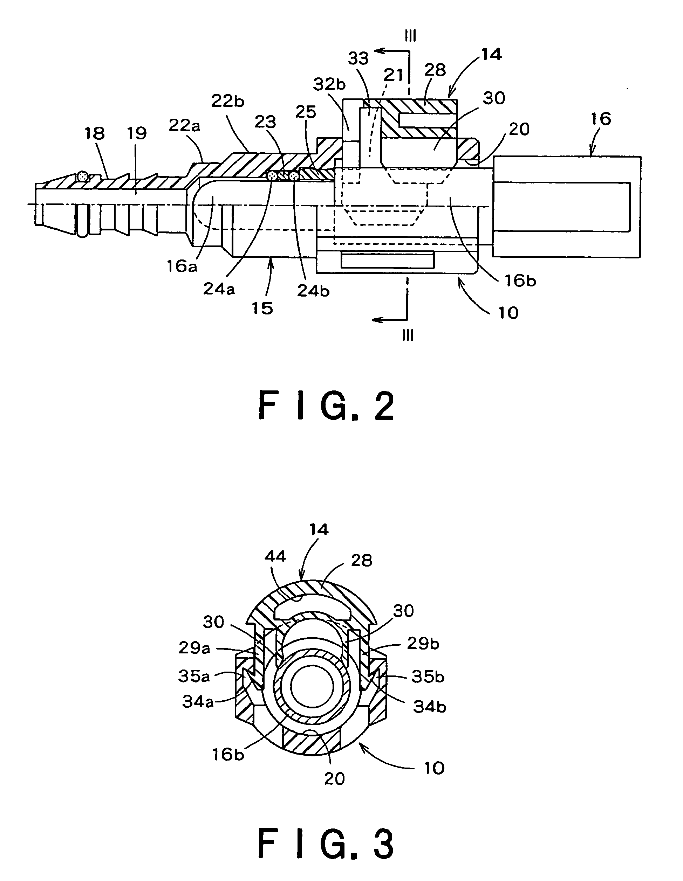

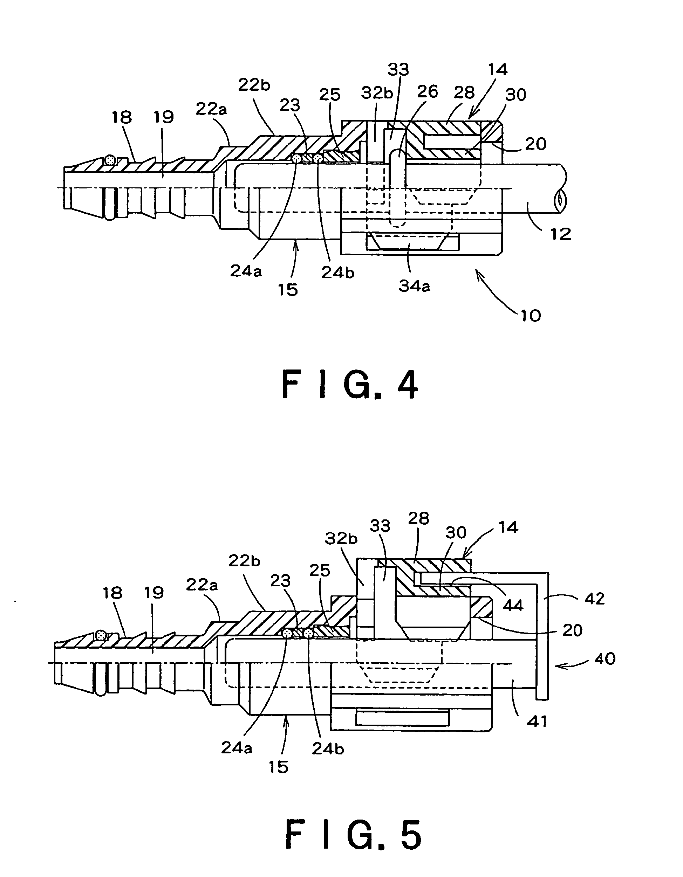

Fig. 1A is an exploded perspective view of an embodiment of a quick connector assembly according to the present invention including a dust plug 16. Shown in Fig. 1A are the quick connector 10 including a retainer 14 and a connector body 15, a tube 12 to be inserted in and fixedly retained the quick connector 10, the retainer 14 for retaining the tube 12 in the quick connector 10 and the dust plug 16. Fig. 2 is a longitudinal sectional view of a temporary quick connector assembly formed by combining the connector body 15, the retainer 14 and the dust plug 16, Fig. 3 is a cross-sectional view taken on the line III-III in Fig. 2, and Fig. 4 is a longitudinal sectional view of the quick connector 10 and the tube 12 retained in the quick connector 10 by the retainer 14.

This embodiment of a quick connector 10 is designed to retain the tube 12 inserted in the connector body 15 by pressing the sliding retainer 14 through an opening formed in the connector body 15 in a radial direction into the connector body 15.

Referring to Fig. 1A, a serrated tube connector 18 is formed integrally with the connector body 15 of the quick connector 10. The serrated tube connector 18 is forced into a resin tube 17. A stepped passage 19 is formed axially through the connector body 15 as shown in Fig. 2. An entrance opening 20 through which the tube 12 is inserted in the connector body 15 is formed at one end, opposite the other end provided with the serrated tube connector 18, of the connector body 15. An opening 21, through which the retainer 14 is pressed into the connector body 15 in a direction perpendicular to the axis of the connector body 15 is formed in a side wall of the connector body 15.

The connector body 15 has a first cylindrical part 22a, a second cylindrical part 22b continuous with the first cylindrical part 22a, and the tube connector 18 continuous with the second cylindrical part 22b. As shown in Fig. 2, O rings 24a and 24b are fitted in the first cylindrical part 22a. The O rings 24a and 24b are spaced apart by a spacer 23. The O rings 24a and 24b are held in place by a top hat 25

Referring to Fig. 1B, the tube 12 is a metal tube provided with an annular ridge 26 in an end part thereof at a predetermined distance from the free end thereof. The retainer 14 pressed through the opening 21 of the connector body 15 engages with the annular ridge 26 to restrain the tube 12 from separating from the connector body 15.

The retainer 14 is a plastic or metal member having a body 28 provided with parallel locking legs 29a and 29b. As shown in Fig. 3, a substantially U-shaped rib 30 is formed integrally with the locking legs 29a and 29b of the retainer 14. The U-shaped rib 30 has a curved inner surface of a curvature substantially equal to that of the outer surface of the tube 12. The tube 12 inserted in the connector body 15 fits in the rib 30.

As shown in Fig. 1A, the retainer 14 is provided with holding ribs 32a and 32b for holding the top hat 25 at a predetermined distance from an end surface of the U-shaped rib 30.

Referring to Fig. 4, in a state where the tube 12 has been fully inserted in the connector body 15 and gaps between the connector body 15 and the tube 12 have been effectively sealed by the O rings 24a and 24b, the annular ridge 26 is placed in a space 33 between the end surface of the U-shaped rib 30 and the end surfaces of the holding ribs 32a and 32b. The retainer 14 is pressed into the connector body 15 in this state to lock the tube 12 to the connector body 15.

When the retainer 14 is thus pressed into the connector body 15, locking hooks 34a and 34b formed at the lower ends of the locking legs 29a and 29b of the retainer 16 engage with the lower edges of side walls of the connector body 15, respectively, to retain the retainer 14 in the connector body 15. When the retainer 14 is thus locked in place, the annular ridge 26 of the tube 12 is in contact with the end edge of the rib 30 of the retainer 14 and the tube 12 is restrained from axially backward movement. Thus the tube 12 and the connector body 15 of the quick connector 10 are connected firmly together by the retainer 14.

In a state where the tube 12 is not inserted sufficiently deep into the connector body 15, the annular ridge 26 of the tube 12 interferes with the rib 30 of the retainer 14 to obstruct the insertion of the retainer 14 in the connector body 15. Consequently,the tube 12 cannot be locked in place in the connector body 15.

The dust plug 16 is used in a quick connector assembly in combination with the quick connector 10.

Referring to Fig. 1A, the dust plug 16 is formed of a resin and has a shape resembling a stepped cylinder. The dust plug 16 has a cylindrical front part serving as an O ring protecting part 16a, and a cylindrical back part 16b serving as a retainer stopping part 16b. The diameter of the O ring protecting part 16a is smaller than that of the retainer stopping part 16b. The retainer stopping part 16b obstructs the insertion of the retainer 14 in the connector body 15.

Referring to Fig. 2, the diameter of the O ring protecting part 16a is slightly smaller than the respective inside diameters of the first cylindrical part 22a and the second cylindrical part 22b and corresponds to the outside diameter of the tube 12. The O ring protecting part 16a fits close in the O rings 24a and 24b.

Half the diameter of the retainer stopping part 16b of the dust plug 16 is greater than the radius of curvature of the inner curved surface of the rib 30 of the retainer 14 as shown in Fig. 3. The diameter of the retainer stopping part 16b is determined so that the rib 30 is unable to engage close with the retainer stopping part 16b. Preferably, the diameter of the retainer stopping part 16b is approximately equal to the diameter of the annular ridge 26 of the tube 12.

A temporary quick connector assembly is formed by inserting the retainer 14 through the opening 21 half deep in the connector body 15 as shown in Fig. 2 after inserting the dust plug 16 sufficiently deep in the connector body 15 of the quick connector 10. The quick connector 10 is delivered to the user in the temporary quick connector assembly.

Referring to Figs. 2 and 3, the O rings 24a and 24b held in the connector body 15 are surely protected from foreign matters, such as dust, by the O ring protecting part 16a of the dust plug 16, and the insertion of the retainer 14 in the connector body 15 to the locking position is obstructed by the retainer stopping part 16b in engagement with the rib 30 of the retainer 14. Thus the retainer 14 will not be accidentally inserted in the connector body 15 to the locking position.

Preferably, recesses 35a and 35b capable of receiving the locking hooks 34a and 34b of the locking legs 29a and 29b of the retainer are formed in the inner surfaces of the right and the left side wall, respectively, of the connector body 15 of the quick connector 10 as shown in Fig. 3. Even if the retainer 14 of the temporary quick connector assembly is pulled outward, the locking hooks 34a and 34b engage with the upper edges of the recesses 35a and 35b and hence the retainer 14 is prevented from coming off the connector body 15.

When the quick connector 10 is used practically for connecting tubes, the tube 12 can be firmly connected to the quick connector 10 simply by removing the dust plug 16 from the quick connector 10, inserting the tube 12 in the connector body 15, and pressing the retainer 14 in the connector body 15. Thus the entrance of foreign matters into the interior of the quick connector 10 before connecting the tube 12 to the quick connector 10 can be prevented.

### Second Embodiment

An embodiment of a dust plug 40 according to the present invention will be described with reference to Fig. 5.

The dust plug 40 has a straight, cylindrical body 41, and an L-shaped retainer stopping arm 42 extending from the back end of the cylindrical body 41.

A temporary quick connector assembly as shown in Fig. 5 is formed by inserting the retainer 14 through the opening 21 half deep in the connector body 15, and fully inserting the dust plug 40 in the connector body 15. In the temporary quick connector assembly, a front end part of the cylindrical body 41 fits in the O rings 24a and 24b to protect the O rings 24a and 24b from foreign matters. When the dust plug 40 is inserted in the connector body 15, an end part of the retainer stopping arm 42 engages in an opening 44 formed in the body 28 of the retainer 14 to restrain the retainer 14 from moving to its locking position. Thus the retainer 14 will not be accidentally moved to the locking position in the connector body 15. The retainer stopping arm 42 may be engaged with a part of the retainer 14 other than the opening 44. For example, the free end of the retainer stopping arm 42 may be engaged with the lower edge of the rib 30 to restrain the retainer 14 from moving into the connector body 15.

As apparent from the foregoing description, the disclosed dust plugs combined with the quick connector can prevent the adhesion of foreign matters to the O rings held in the connector body and surely prevent the movement of the retainer to the locking position in the connector body.

## Claims

1. A dust plug (40) for a quick connector (10) in which a tube (12) provided with an annular ridge (26) is to be inserted and fixedly retained, the quick connector (10) including: (i) a connector body (15) having an axis, an entrance opening (20) formed at one end through which the tube (12) is to be inserted in the connector body (15), O rings (24a, 24b) held in the connector body (15) to effectively seal gaps between the connector body (15) and the tube (12) when it has been fully inserted in the connector body, and an opening (21) formed in a side wall of the connector body (15); and (ii) a retainer (14) to be inserted in the connector body (15), for retaining the tube (12) in the connector body (15), by pressing the retainer (14) through the opening (21) in the connector body side wall in a direction perpendicular to the axis of the connector body (15) to engage with the annular ridge (26) of the tube (12) when it has been fully inserted in the connector body (15) to restrain the tube (12) from separating from the tubular body, wherein the quick connector (10) is to be used by removing the dust plug (40) from the quick connector (10), inserting the tube (12) in the connector body (15) and pressing the retainer (14) into the connector body (15), the dust plug comprising:
a cylindrical O ring protecting part (41) to fit in the O rings (24a, 24b), when the dust plug (40) is inserted in the connector body (15), for protecting the O rings (24a, 24b) from foreign matters,
**characterized in that**:
the dust plug further comprises a stopping arm (42) formed integrally with the O ring protecting part (41) and capable, when the dust plug (40) is inserted in the connector body (15), of engaging with a part of the retainer (14) outside the connector body (15) to obstruct the insertion of the retainer (14) into the connector body (15).

2. A quick connector assembly including quick connector (10) in which a tube (12) provided with an annular ridge (26) is to be inserted and fixedly retained, the quick connector (10) comprising:
a connector body (15) having an axis, an entrance opening (20) formed at one end through which the tube (12) is to be inserted in the connector body (15), O rings (24a, 24b) held in the connector body (15) to effectively seal gaps between the connector body (15) and the tube (12) when it has been fully inserted in the connector body, and an opening (21) formed in a side wall of the connector body (15); and
a retainer (14) to be inserted in the connector body (15), for retaining the tube (12) in the connector body (15), by pressing the retainer (14) through the opening (21) in the connector body side wall in a direction perpendicular to the axis of the connector body (15) to engage with the annular ridge (26) of the tube (12) when it has been fully inserted in the connector body (15) to restrain the tube (12) from separating from the tubular body
the quick connector assembly further including a dust plug (16, 40) comprising:
an O ring protecting part (16a, 41) to fit in the O rings (24a, 24b), when the dust plug (16, 40) is inserted in the connector body (15), for protecting the O rings (24a, 24b) from foreign matters,
**characterized in that**:
the dust plug further comprises a retainer stopping part (16b, 42) formed integrally with the O ring protecting part (16a, 41) and capable, when the dust plug (16, 40) is inserted in the connector body (15), of interfering with a part of the retainer (14) to obstruct the insertion of the retainer (14) into the connector body (15), wherein the dust plug is inserted in the connector body (15), such that the retainer (14) is obstructed from being inserted in the connector body (15).

3. The quick connector assembly according to claim 2, wherein the dust plug is a cylindrical member integrally having a first cylindrical part of a small diameter as the O ring protecting part (16a), and a second cylindrical part of a large diameter as the retainer stopping part (16b).

4. The quick connector assembly according to claim 2, wherein the dust plug has a cylindrical part (41) as the O ring protecting part, and further comprises a stopping arm (42) capable, when the dust plug is inserted in the connector body (15), of engaging with a part of the retainer (14) outside the connector body (15) for obstructing the retainer from insertion into the connector body (15).

5. The quick connector assembly according to claim 2, 3 or 4, wherein said retainer includes:
locking legs (29a, 29b) configured, when the retainer is inserted in the connector body, to engage lower edges of side walls of the connector body to lock the retainer in place in the connector body; and
a U-shaped rib (30) configured, when the tube free end is sufficiently completely inserted in the connector body (15) to receive the end of the tube (12) therein and to retain the tube (12) in the connector body (15) by the annular ridge (26),
wherein said U-shaped rib is configured, when the dust plug is inserted in the connector body, so as to be incapable of receiving the retainer stopping part of the dust plug therein, the dust plug thereby obstructing insertion of the retainer (14) in the connector body.

6. A quick connector assembly including a quick connector (10) in which a tube (12) provided with an annular ridge (26) is to be inserted and fixedly retained, the quick connector (10) comprising:
a connector body (15) having an axis, an entrance opening (20) formed at one end through which the tube (12) is to be inserted in the connector body (15), O rings (24a, 24b) held in the connector body (15) to effectively seal gaps between the connector body (15) and the tube (12) when it has been fully inserted in the connector body, and an opening (21) formed in a side wall of the connector body (15); and
a retainer (14) to be inserted in the connector body (15), for retaining the tube (12) in the connector body (15), by pressing the retainer (14) through the opening (21) in the connector body side wall in a direction perpendicular to the axis of the connector body (15) to engage with the annular ridge (26) of the tube (12) when it has been fully inserted in the connector body (15) to restrain the tube (12) from separating from the tubular body,
**characterized in that**: the quick connector assembly further includes a dust plug (40) according to claim 1; and
said retainer (14) further comprises an opening (44) configured for sliding engagement outside the connector body by the arm of the dust plug, said dust plug being inserted in the connector body (15) in place of said tube free end, such that the arm thereby obstructs insertion of the retainer (14) into the connector body.

## Patentansprüche

1. Staubstecker (40) für eine Schnellverbindung (10), in der eine Röhre (12), die mit einem ringförmigen Rand (26) versehen ist, einzusetzen und festzuhalten ist, wobei die Schnellverbindung (10) aufweist: (i) einen Verbindungskörper (15) mit einer Achse, einer Eingangsöffnung (20), die an einem Ende ausgebildet ist, durch das die Röhre (12) in den Verbindungskörper (15) einzusetzen ist, O-Ringen (24a, 24b), die in dem Verbindungskörper (15) gehalten werden, um Spalte zwischen dem Verbindungskörper (15) und der Röhre (12) effizient abzudichten, wenn sie vollständig in den Verbindungskörper eingesetzt wurde, und einer Öffnung (21), die in einer Seitenwand des Verbindungskörpers (15) ausgebildet ist; und (ii) eine Aufnahme (14), die in den Verbindungskörper (15) einzusetzen ist, um die Röhre (12) in dem Verbindungskörper (15) aufzunehmen, indem die Aufnahme (14) durch die Öffnung (21) in der Verbindungskörper-Seitenwand in einer zu der Achse des Verbindungskörpers (15) senkrechten Richtung gedrückt wird, um mit dem ringförmigen Rand (26) der Röhre (12) in Eingriff zu kommen, wenn sie vollständig in den Verbindungskörper (15) eingesetzt wurde, um die Röhre (12) daran zu hindern, sich von dem röhrenförmigen Körper zu trennen, wobei die Schnellverbindung (10) durch Entfernen des Staubsteckers (40) aus der Schnellverbindung (10), Einsetzen der Röhre (12) in den Verbindungskörper (15) und Drücken der Aufnahme (14) in den Verbindungskörper (15) zu verwenden ist, wobei der Staubstecker aufweist:
einen zylindrischen O-Ring-Schutzteil (41), der in die O-Ringe (24a, 24b) passt, wenn der Staubstecker (40) in den Verbindungskörper (15) eingesetzt wurde, um die O-Ringe (24a, 24b) vor Fremdkörpern zu schützen,
**dadurch gekennzeichnet, dass**:
der Staubstecker ferner einen Anschlagarm (42) aufweist, der integral mit dem O-Ring-Schutzteil (41) ausgebildet und dazu in der Lage ist, mit einem Teil der Aufnahme (14) außerhalb des Verbindungskörpers (15) in Eingriff zu kommen, wenn der Staubstecker (40) in den Verbindungskörper (15) eingesetzt wird, um das Einsetzen der Aufnahme (14) in den Verbindungskörper (15) zu hemmen.

2. Schnellverbindungsanordnung mit einer Schnellverbindung (10), in die eine Röhre (12), die mit einem ringförmigen Rand (26) versehen ist, einzusetzen und festzuhalten ist, wobei die Schnellverbindung (10) umfasst:
einen Verbindungskörper (15) mit einer Achse, einer Eingangsöffnung (20), die an einem Ende ausgebildet ist, durch das die Röhre in den Verbindungskörper (15) einzusetzen ist, O-Ringen (24a, 24b), die in dem Verbindungskörper (15) gehalten werden, um Spalte zwischen dem Verbindungskörper (15) und der Röhre (12) effizient abzudichten, wenn sie vollständig in den Verbindungskörper eingesetzt wurde, und einer Öffnung (21), die in einer Seitenwand des Verbindungskörpers (15) ausgebildet ist; und
eine Aufnahme (14), die in den Verbindungskörper (15) einzusetzen ist, um die Röhre (12) in dem Verbindungskörper (15) zu halten, indem die Aufnahme (14) durch die Öffnung (21) in der Verbindungskörper-Seitenwand in einer zu der Achse des Verbindungskörpers (15) senkrechten Richtung eingedrückt wird, um mit dem ringförmigen Rand (26) der Röhre (12) in Eingriff zu kommen, wenn sie vollständig in den Verbindungskörper (15) eingesetzt wurde, um die Röhre (12) daran zu hindern, sich von dem röhrenförmigen Körper zu trennen,
wobei die Schnellverbindungsanordnung ferner einen Staubstecker (16, 40) aufweist, welcher umfasst:
einen O-Ring-Schutzteil (16a, 41), um in die O-Ringe (24a, 24b) zu passen, wenn der Staubstecker (16, 40) in den Verbindungskörper (15) eingesetzt wurde, um die O-Ringe (24a, 24b) vor Fremdkörpern zu schützen,
**dadurch gekennzeichnet, dass**:
der Staubstecker ferner einen Aufnahmeanschlagteil (16b, 42) aufweist, der integral mit dem O-Ring-Schutzteil (16a, 41) ausgebildet und dazu in der Lage ist, wenn der Staubstecker (16, 40) in den Verbindungskörper (15) eingesetzt wurde, mit einem Teil der Aufnahme (14) zusammenzuwirken, um das Einsetzen der Aufnahme (14) in den Verbindungskörper (15) zu hemmen, wobei der Staubstecker derart in den Verbindungskörper (15) eingesetzt wird, dass die Aufnahme (14) daran gehindert wird, in den Verbindungskörper (15) eingesetzt zu werden.

3. Schnellverbindungsanordnung nach Anspruch 2, wobei der Staubstecker ein zylindrisches Element ist, das integral einen ersten zylindrischen Teil eines kleinen Durchmessers als den O-Ring-Schutzteil (16a) und einen zweiten zylindrischen Teil eines großen Durchmessers als den Aufnahmeanschlagteil (16b) aufweist.

4. Schnellverbindungsanordnung nach Anspruch 2, wobei der Staubstecker einen zylindrischen Teil (41) als den O-Ring-Schutzteil aufweist und ferner einen Anschlagarm (42) aufweist, der dazu in der Lage ist, wenn der Staubstecker in den Verbindungskörper (15) eingesetzt wird, mit einem Teil der Aufnahme (14) außerhalb des Verbindungskörpers (15) in Eingriff zu kommen, um die Aufnahme daran zu hindern, in den Verbindungskörper (15) eingesetzt zu werden.

5. Schnellverbindungsanordnung nach Anspruch 2, 3 oder 4, wobei die Aufnahme aufweist:
Arretierungsarme (29a, 29b), die dazu ausgestaltet sind, untere Kanten von Seitenwänden des Verbindungskörpers zu ergreifen, wenn die Aufnahme in den Verbindungskörper eingesetzt wurde, um die Aufnahme an ihrem Ort im Verbindungskörper zu halten; und
eine U-förmige Rippe (30), die dazu ausgestaltet ist, das Ende der Röhre (12) darin aufzunehmen, wenn das freie Ende der Röhre ausreichend vollständig in den Verbindungskörper (15) eingesetzt ist, und die Röhre (12) in dem Verbindungskörper (15) durch den ringförmigen Rand (26) zu halten,
wobei die U-förmige Rippe dazu ausgestaltet ist, wenn der Staubstecker in den Verbindungskörper eingesetzt wird, den Halterungsanschlagteil des Staubsteckers nicht in sich aufnehmen zu können, wodurch der Staubstecker ein Einsetzen der Aufnahme (14) in den Verbindungskörper verhindert.

6. Schnellverbindungsanordnung mit einer Schnellverbindung (10), in der eine Röhre (12), die mit einem ringförmigen Rand (26) versehen ist, einzusetzen und festgehalten ist, wobei die Schnellverbindung (10) aufweist:
einen Verbindungskörper (15) mit einer Achse, einer Eingangsöffnung (20), die an einem Ende ausgebildet ist, durch das die Röhre (12) in den Verbindungskörper (15) einzusetzen ist, O-Ringen (24a, 24b), die in dem Verbindungskörper (15) gehalten werden, um Spalte zwischen dem Verbindungskörper (15) und der Röhre (12) effizient abzudichten, wenn sie vollständig in den Verbindungskörper eingesetzt wurde, und einer Öffnung (21), die in einer Seitenwand des Verbindungskörpers (15) ausgebildet ist; und
eine Aufnahme (14), die in den Verbindungskörper (15) einzusetzen ist, um die Röhre (12) in dem Verbindungskörper (15) zu halten, indem die Aufnahme (14) durch die Öffnung (21) in der Verbindungskörper-Seitenwand in einer zu der Achse des Verbindungskörpers (15) senkrechten Richtung gedrückt wird, um mit dem ringförmigen Rand (26) der Röhre (12) in Eingriff zu kommen, wenn sie vollständig in den Verbindungskörper (15) eingesetzt wurde, um die Röhre (12) daran zu hindern, sich von dem röhrenförmigen Körper zu trennen,
**dadurch gekennzeichnet, dass**:
die Schnellverbindungsanordnung ferner einen Staubstecker (40) nach Anspruch 1 aufweist; und
die Aufnahme (14) ferner eine Öffnung (44) aufweist, die für einen Gleiteingriff außerhalb des Verbindungskörpers durch den Arm des Staubsteckers ausgestaltet ist, wobei der Staubstecker in den Verbindungskörper (15) anstelle des freien Endes der Röhre eingesetzt ist, sodass der Arm **dadurch** das Einsetzen der Aufnahme (14) in den Verbindungskörper verhindert.

## Revendications

1. Bouchon anti-poussière (40) pour un connecteur rapide (10) dans lequel un tube (12) doté d'une crête annulaire (26) doit être inséré et retenu de manière fixe, le connecteur rapide (10) comprenant : (i) un corps de connecteur (15) ayant un axe, une ouverture d'entrée (20) formée au niveau d'une extrémité à travers laquelle le tube (12) doit être inséré dans le corps de connecteur (15), des joints toriques (24a, 24b) maintenus dans le corps de connecteur (15) pour réaliser efficacement l'étanchéité des espaces situés entre le corps de connecteur (15) et le tube (12) lorsqu'il a été complètement inséré dans le corps de connecteur, et une ouverture (21) formée dans une paroi latérale du corps de connecteur (15) ; et (ii) un dispositif de retenue (14) à insérer dans le corps de connecteur (15), pour retenir le tube (12) dans le corps de connecteur (15), en comprimant le dispositif de retenue (14) à travers l'ouverture (21) dans la paroi latérale du corps de connecteur dans une direction perpendiculaire à l'axe du corps de connecteur (15) afin de se mettre en prise avec la crête annulaire (26) du tube (12) lorsqu'il a été complètement inséré dans le corps de connecteur (15) pour empêcher le tube (12) de se séparer du corps tubulaire, dans lequel le connecteur rapide (10) doit être utilisé en retirant le bouchon anti-poussière (40) du connecteur rapide (10), en insérant le tube (12) dans le corps de connecteur (15) et en comprimant le dispositif de retenue (14) dans le corps de connecteur (15), le bouchon anti-poussière comprenant :
une partie de protection (41) de joint torique cylindrique destinée à s'adapter dans les joints toriques (24a, 24b) lorsque le bouchon anti-poussière (40) est inséré dans le corps de connecteur (15), pour protéger les joints toriques (24a, 24b) des corps étrangers,
**caractérisé en ce que** :
le bouchon anti-poussière comprend en outre un bras de butée (42) formé de manière solidaire avec la partie de protection de joint torique (41) et capable, lorsque le bouchon anti-poussière (40) est inséré dans le corps de connecteur (15), de se mettre en prise avec une partie du dispositif de retenue (14) à l'extérieur du corps de connecteur (15) afin d'empêcher l'insertion du dispositif de retenue (14) dans le corps de connecteur (15).

2. Ensemble de connecteur rapide comprenant un connecteur rapide (10) dans lequel un tube (12) doté d'une crête annulaire (26) doit être inséré et retenu de manière fixe, le connecteur rapide (10) comprenant :
✔ un corps de connecteur (15) ayant un axe, une ouverture d'entrée (20) formée au niveau d'une extrémité à travers laquelle le tube (12) doit être inséré dans le corps de connecteur (15), des joints toriques (24a, 24b) maintenus dans le corps de connecteur (15) pour réaliser efficacement l'étanchéité des espaces situés entre le corps de connecteur (15) et le tube (12) lorsqu'il a été complètement inséré dans le corps de connecteur, et une ouverture (21) formée dans une paroi latérale du corps de connecteur (15) ; et
✔ un dispositif de retenue (14) à insérer dans le corps de connecteur (15), pour retenir le tube (12) dans le corps de connecteur (15), en comprimant le dispositif de retenue (14) à travers l'ouverture (21) dans la paroi latérale de corps de connecteur dans une direction perpendiculaire à l'axe du corps de connecteur (15) afin de se mettre en prise avec +la crête annulaire (26) du tube (12) lorsqu'il a été complètement inséré dans le corps de connecteur (15) afin d'empêcher le tube (12) de se séparer du corps tubulaire,
l'ensemble de connecteur rapide comprenant en outre un bouchon anti-poussière (16, 40) comprenant :
une partie de protection de joint torique (16a, 41) destinée à s'adapter dans les joints toriques (24a, 24b), lorsque le bouchon anti-poussière (16, 40) est inséré dans le corps de connecteur (15), pour protéger les joints toriques (24a, 24b) des corps étrangers,
**caractérisé en ce que** :
le bouchon anti-poussière comprend en outre une partie de butée de dispositif de retenue (16b, 42) formée de manière solidaire avec la partie de protection de joint torique (16a, 41) et capable, lorsque le bouchon anti-poussière (16, 40) est inséré dans le corps de connecteur (15), d'interférer avec une partie du dispositif de retenue (14) pour empêcher l'insertion du dispositif de retenue (14) dans le corps de connecteur (15), lorsque le bouchon anti-poussière est inséré dans le corps de connecteur (15), de sorte que l'on empêche l'insertion du dispositif de retenue (14) dans le corps de connecteur (15).

3. Ensemble de connecteur rapide selon la revendication 2, dans lequel le bouchon anti-poussière est un élément cylindrique ayant de manière solidaire une première partie cylindrique de petit diamètre comme la partie de protection de joint torique (16a), et une deuxième partie cylindrique de grand diamètre comme la partie de butée de dispositif de retenue (16b).

4. Ensemble de connecteur rapide selon la revendication 2, dans lequel le bouchon anti-poussière a une partie cylindrique (41) comme la partie de protection de joint torique, et comprend en outre un bras de butée (42) capable, lorsque le bouchon anti-poussière est inséré dans le corps de connecteur (15), de se mettre en prise avec une partie du dispositif de retenue (14) à l'extérieur du corps de connecteur (15) pour empêcher l'insertion du dispositif de retenue dans le corps de connecteur (15).

5. Ensemble de connecteur rapide selon la revendication 2, 3 ou 4, dans lequel ledit dispositif de retenue comprend :
✔ des pattes de blocage (29a, 29b) configurées, lorsque le dispositif de retenue est inséré dans le corps de connecteur, pour mettre en prise des bords inférieurs des parois latérales du corps de connecteur afin de bloquer le dispositif de retenue en place dans le corps de connecteur ; et
✔ une nervure en forme de U (30) configurée, lorsque l'extrémité libre du tube est suffisamment complètement insérée dans le corps de connecteur (15) pour recevoir l'extrémité du tube (12) à l'intérieur de cette dernière et pour retenir le tube (12) dans le corps de connecteur (15) grâce à la crête annulaire (26),
dans lequel ladite nervure en forme de U est configurée, lorsque le bouchon anti-poussière est inséré dans le corps de connecteur, pour être incapable de recevoir la partie de butée de dispositif de retenue du bouchon anti-poussière à l'intérieur de cette dernière, le bouchon anti-poussière empêchant ainsi l'insertion du dispositif de retenue (14) dans le corps de connecteur.

6. Ensemble de connecteur rapide comprenant un connecteur rapide (10) dans lequel un tube (12) prévu avec une crête annulaire (26) doit être inséré et retenu de manière fixe, le connecteur rapide (10) comprenant :
✔ un corps de connecteur (15) ayant un axe, une ouverture d'entrée (20) formée au niveau d'une extrémité à travers laquelle le tube (12) doit être inséré dans le corps de connecteur (15), des joints toriques (24a, 24b) maintenus dans le corps de connecteur (15) pour réaliser efficacement l'étanchéité des espaces situés entre le corps de connecteur (15) et le tube (12) lorsqu'il a été complètement inséré dans le corps de connecteur, et une ouverture (21) formée dans une paroi latérale du corps de connecteur (15) ; et
✔ un dispositif de retenue (14) à insérer dans le corps de connecteur (15) pour retenir le tube (12) dans le corps de connecteur (15), en comprimant le dispositif de retenue (14) à travers l'ouverture (21) dans la paroi latérale du corps de connecteur dans une direction perpendiculaire à l'axe du corps de connecteur (15) afin de se mettre en prise avec la crête annulaire (26) du tube (12) lorsqu'il a été complètement inséré dans le corps de connecteur (15) pour empêcher la séparation du tube (12) du corps tubulaire,
**caractérisé en ce que** :
✔ l'ensemble de connecteur rapide comprend en outre un bouchon anti-poussière (40) selon la revendication 1 ; et
✔ ledit dispositif de retenue (14) comprend en outre une ouverture (44) configurée pour la mise en prise coulissante à l'extérieur du corps de connecteur par le bras du bouchon anti-poussière, ledit bouchon anti-poussière étant inséré dans le corps de connecteur (15) à la place de ladite extrémité libre du tube, de sorte que le bras empêche ainsi l'insertion du dispositif de retenue (14) dans le corps de connecteur.
